# EUROPEAN PATENT SPECIFICATION

(11) **EP 3 715 434 B1**
(45) Date of publication and mention of the grant of the patent: **09.08.2023**
(21) Application number: 18896293.0
(22) Date of filing: 10.12.2018
(51) Int. Cl.: C09J 153/02, C09J 7/35, C08L 91/00, C09J 11/08, C09J 11/06, C08F 297/04, C09J 7/38

(54) **HOT-MELT ADHESIVE COMPOSITION**
SCHMELZKLEBSTOFFZUSAMMENSETZUNG
COMPOSITION ADHÉSIVE THERMOFUSIBLE

(30) Priority: 27.12.2017 KR 20170181534; 06.12.2018 KR 20180156147
(43) Date of publication of application: 30.09.2020
(73) Proprietor: LG CHEM, LTD., Yeongdeungpo-gu, Seoul 07336 (KR)
(72) Inventor: PARK, Yong Su, Daejeon 34122 (KR); KIM, Tae Yun, Daejeon 34122 (KR); LEE, Yong Man, Daejeon 34122 (KR); RYU, Jin Young, Daejeon 34122 (KR)
(74) Representative: Goddar, Heinz J.
(86) International application number: PCT/KR2018/015624
(87) International publication number: WO 2019/132320

(56) References cited:
- EP-A1- 1 411 100
- WO-A1-2015/109160
- WO-A1-2015/109160
- KR-A- 20110 048 893
- KR-A- 20160 010 462
- KR-B1- 101 025 778
- KR-B1- 101 331 701

## Description

### BACKGROUND OF THE INVENTNION

### (a) Field of the Invention

The present disclosure relates to a hot-melt adhesive composition.

### (b) Description of the Related Art

Hot-melt adhesive is an adhesive using a thermoplastic resin that melts on heating to form an adhesive surface. Unlike a conventional UV-curable adhesive, the hot-melt adhesive is preferred as an environment-friendly and high-functional adhesive because it does not use volatile solvents, etc. and thus the amount of harmful substances is small during curing.

Not only the hot-adhesive is relatively less expensive than the UV curable adhesive, but also it exists in a liquid state at a high temperature and so it is applied on the substrate or adherend to facilitate pressure bonding, and subsequently, since it exhibits an adhesive force while being cooled and solidified within a few seconds at room temperature, it is easy to use.

The hot-melt adhesive contains a thermoplastic polymer as a base resin, and generally, a tackifier or a viscosity modifier, etc. is added thereto.

As the base resin, an olefin-based copolymer, an unsaturated aromatic copolymer, an unsaturated aromatic elastic copolymer or the like which is excellent in flexibility and low in unit price, is widely used.

Since such a hot-melt adhesive is applied to the adherend in a molten state and then cooled to form a hard phase having cohesiveness, creep resistance and the like, it is widely used in various industrial fields, such as diapers, feminine hygiene products, or pressure sensitive tape adhesives for electronic applications such as industrial tapes, packaging tapes, and structural materials, etc.

Since the hot-melt adhesive contains a base resin and additives, etc., phase separation and bleeding phenomena may occur due to compatibility and other reasons, which may cause a problem that the adhesive force is reduced. Further, it has high viscosity, and thus requires relatively high temperature conditions during melt processing for adhesion, in particular, under such processing temperature conditions, problems such as viscosity change, odor generation, and discoloration may occur, and thus the demand for low-viscosity products with a relatively low melting temperature is increasing.

However, a low-viscosity hot-melt adhesive capable of low-temperature processing has a low viscosity retention rate, which easily cause a decrease in adhesive force. Further, it is problematic in that it has low heat resistance such as a softening point.

Therefore, there is a need to develop a hot-melt adhesive that can maintain low viscosity characteristics and improve in processability, and simultaneously, is superior in terms of adhesive force and heat resistance and also in terms of mechanical properties after curing.

WO 2015/109 160 A discloses a hot melt adhesive composed of a styrene-butadiene-styrene polymer having a relatively high diblock content and styrene content, a second styrenic block copolymer having a lower diblock content than the styrene-butadiene-styrene polymer, which is preferably a styrene-isoprene-styrene polymer, together with tackifying resin, and liquid plasticizer. The preferred styrene-butadiene-styrene polymer contains a styrene content of greater than 30 percent and a diblock content greater than 30 percent by weight. When used in conjunction with a styrene-isoprene-styrene polymer, the hot melt composition provides improved peel strength at 5 °C, and when used as a pad attachment positioning adhesive, did not exhibit adhesive transfer at 40 °C.

EP 1 411 100 A1 relates to a hotmelt adhesive including a component (I): block copolymer, a component (II) : tackifier, and a component (III) : plasticizer. The component (I): block copolymer comprises at least 30 wt% of styrene-butadiene-styrene block copolymer (A) having a styrene content rate of 35 to 50 wt%, a styrene-butadiene diblock content rate of 50 to 80 wt%, and a viscosity of a 15 wt% toluene solution at 25°C of 20 to 40 mPa·s. The component (I) is contained in 17 to 30 wt% with respect to the total amount of the components (I), (II), and (III).

### SUMMARY OF THE INVENTION

### [Technical Problem]

It is an object of the present disclosure to provide a hot-melt adhesive composition that has a low-viscosity characteristic and thus can be melt processed at relatively low temperatures and improved in processability, and simultaneously, is superior in terms of adhesive force and heat resistance and also in terms of mechanical properties after curing.

### [Technical Solution]

In one aspect of the present disclosure, there is provided a hot-melt adhesive composition comprising:
A) a styrene-butadiene-styrene triblock copolymer having:
   a1) a styrene-based unit content of 30 to 50% by weight,
   a2) a diblock content of 55% by weight or more, and
   a3) a melt flow index of 30 g/10 min to 50 g/10 as measured according to ASTM D1238 standard at 190 °C/5 kg,
B) a tackifier; and
C) a plasticizer oil,
wherein the hot-melt adhesive composition has a softening point of 75°C or more as measured according to ASTM D36 standard, and wherein the plasticizer oil is included in an amount of 90-110 parts by weight based on 100 parts by weight of the styrene-butadiene-styrene triblock copolymer, wherein a melt viscosity at 120°C is 4,5 Pa*s (4500 cPs) to 5,2 Pa*s (5200 cPs), wherein a melt viscosity at 160°C is 0.65 Pa*s (650 cPs) to 0.75 Pa*s (750 cPs), and wherein the hot-melt adhesive composition has a tensile strength value of 0.5 to 0.6 N/mm² at the time of preparing a specimen according to ASTM D638 standard.

In another aspect of the present disclosure, there is provided an adhesive member comprising:
a substrate; and
an adhesive layer formed on at least one surface of the substrate and formed by the hot-melt adhesive composition.

### [Advantageous Effects]

The hot-melt adhesive compositions according to the present disclosure maintains a low-viscosity characteristic and thereby can be melt processed at relatively low temperatures and improved in processability, and simultaneously, is superior in terms of adhesive force and heat resistance and also in terms of mechanical properties after curing, and therefore, can be used in various industrial fields.

### DETAILED DESCRIPTION OF THE EMBODIMENTS

The hot-melt adhesive composition according to one aspect of the present disclosure, comprises:
A) a styrene-butadiene-styrene triblock copolymer having:
   a1) a styrene-based unit content of 30 to 50% by weight,
   a2) a diblock content of 55% by weight or more, and
   a3) a melt flow index of 30 g/10 min to 50 g/10 as measured according to ASTM D1238 standard at 190 °C/5 kg,
B) a tackifier; and
C) a plasticizer oil,
wherein the hot-melt adhesive composition has a softening point of 75°C or more as measured according to ASTM D36 standard, and wherein the plasticizer oil is included in an amount of 90-110 parts by weight based on 100 parts by weight of the styrene-butadiene-styrene triblock copolymer, wherein a melt viscosity at 120°C is 4,5 Pa*s (4500 cPs) to 5,2 Pa*s (5200 cPs), wherein a melt viscosity at 160°C is 0.65 Pa*s (650 cPs) to 0.75 Pa*s (750 cPs), and wherein the hot-melt adhesive composition has a tensile strength value of 0.5 to 0.6 N/mm² at the time of preparing a specimen according to ASTM D638 standard.

And, according to one embodiment of the present disclosure, the hot-melt adhesive composition has a melt viscosity at 120°C of 4,5 Pa*s to 5,2 Pa*s (4500 to 5200 cPs), and at this time, a rate of change in the viscosity may be about 10% or less.

And, according to another embodiment of the present disclosure, the hot-melt adhesive composition may has a melt viscosity at 160°C of 0.65 Pa*s to 0.75 Pa*s (650 to 750 cPs), and at this time, a rate of change in the viscosity maybe about 10% or less.

In addition, the hot-melt adhesive composition has a tensile strength value of 0.5 to 0.6 N/mm²at the time of preparing a specimen according to ASTM D638 standard.

Further, the tackifier contained in the hot-melt adhesive composition may include any one or more of at least partially hydrogenated rosin ester-based compounds and at least partially hydrogenated dicyclopentadiene-based polymerized petroleum resins.

Further, the tackifier may be included in an amount of about 200 to about 400 parts by weight, or about 250 to about 350 parts by weight, or about 270 to 330 parts by weight based on 100 parts by weight of the styrene-butadiene-styrene triblock copolymer.

The plasticizer oil may include petroleum-based mineral oils.

Further, the plasticizer oil is included in an amount of 90 to 110 parts by weight based on 100 parts by weight of the styrene-butadiene-styrene triblock copolymer.

Meanwhile, according to another aspect of the present disclosure, there is provided an adhesive member comprising:
a substrate; and
an adhesive layer formed on at least one surface of the substrate and formed by the hot-melt adhesive composition.

At this time, the thickness of the adhesive layer may be about 10 to about 100 *µ*m, preferably about 30 to about 70/*µ*m.

Further, the adhesive member may have a T-peeling strength value of 10 N/2.54 cm (N/in) or more, preferably about 10 to about 15 N/2.54 cm (N/in), or about 10 to about 12 N/2.54 cm (N/in) as measured according to ASTM D1876 standard.

The terms "first," "second," etc. are used herein to describe various elements, and these terms are only used to distinguish one element from another.

Further, the terms used herein are used only to explain illustrative examples, and are not intended to limit the invention. A singular expression includes a plural expression unless clearly meaning otherwise. It should be understood that the terms "comprise", "include", and "have" as used herein are intended to designate the presence of stated features, numbers, steps, constitutional elements, or combinations thereof, but it should be understood that they do not preclude the possibility of existence or adding of one or more other features, numbers, steps, constitutional elements, or combinations thereof.

Further, in the present disclosure, in case a layer or an element is mentioned to be formed "on" or "above" another layer or element, it means that the layer or element is directly formed on the other layer or element, or it means that another layer or element may be additionally formed between layers or on a subject or substrate.

In the present disclosure, in the styrene-butadiene-styrene triblock copolymers, the diblock content means the content of the copolymer remaining in the form of styrene-butadiene diblock, without being coupled in the process of preparing a styrene-butadiene-styrene triblock copolymer by performing a coupling reaction with respect to the styrene-butadiene block copolymer.

That is, the styrene-butadiene-styrene triblock copolymer described herein may have a form in which the polymerization reaction and the coupling reaction are completely progressed to include only styrene-butadiene-styrene triblock, and it may be in the form of a mixture containing a styrene-butadiene-styrene triblock, the above-described diblock, and unreacted monomers.

Further, the content of the diblock in the triblock copolymer means the ratio of the styrene-butadiene diblock (wt%) contained therein relative to the total weight (100 wt%), by measuring the molecular weight distribution of the copolymer by GPC or the like.

In general, it is very important that the hot-melt adhesive composition secures physical properties related to adhesion such as tackiness, adhesion retention force, and peel strength depending on its use and properties. These physical properties will vary greatly depending on the components of the thermoplastic resin, i.e., the base resin, contained in the hot-melt adhesive composition.

When an olefin copolymer having a small polarity is used, it is difficult to secure sufficient adhesiveness, when a thermoplastic elastic copolymer or the like is used, the viscosity is high and the workability may be reduced, and when an amorphous alpha-olefin copolymer or the like is used, there is a disadvantage in that the cohesive force is low and the workability is also poor.

In the case of a styrene-based copolymer, the heat resistance is excellent and the viscosity is relatively low, and thus the processability is also excellent, and it has excellent advantages with other components used together, such as a tackifier or a plasticizer (oil). Among them, the styrene-butadiene-styrene triblock copolymer is most preferred.

However, these physical properties may vary depending on the structural characteristics of the styrene-butadiene-styrene triblock copolymer.

From such a viewpoint, the styrene-butadiene-styrene triblock copolymer used in the hot-melt adhesive composition according to one aspect of the present disclosure has:
a1) a styrene-based unit content of 30 to 50% by weight,
a2) a diblock content of 55% by weight or more, and
a3) a melt flow index of 30 g/10 min to 50 g/10 min as measured according to ASTM D1238 standard at 190 °C/5 kg,

First, the styrene-butadiene-styrene triblock copolymer has a styrene-based unit content of 30 to 50% by weight, preferably about 35 to about 50% by weight, more preferably about 45 to about 50% by weight.

Since the styrene-based monomer has a glass transition temperature (Tg) value higher than room temperature, it forms a hard segment unit having a relatively rigid property during polymerization of the copolymer. The butadiene-based monomer has a glass transition temperature value lower than room temperature, and thus forms a soft segment unit having relatively flexible properties during polymerization of the copolymer,

Considering these properties, when the content of the styrene-based unit derived from the styrene-based monomer is too low, the hardness of the hot-melt adhesive composition is lowered, which may cause a problem that heat resistance is lowered. In addition, there may be a problem that mechanical properties are deteriorated after adhesion and curing.

And, when the content of the styrene-based unit derived from the styrene-based monomer is too high, the hardness of the hot-melt adhesive composition is increased and the viscosity is also increased, which may cause a problem that the processability is lowered and the adhesive force is also lowered.

Further, the styrene-butadiene-styrene triblock copolymer has a diblock content of 55% by weight or more, preferably about 60% by weight or more, and more preferably about 60 to about 65% by weight.

In the above-mentioned styrene-butadiene-styrene triblock copolymer, when the styrene-butadiene diblock content satisfies the above range, the phenomenon in which the viscosity decreases can be clearly confirmed, and due to the increase in viscosity, the adhesive force can be improved.

Further, in order to impart a high softening point and a high fluidity at the time of producing the hot-melt adhesive composition, it is generally necessary to use polyolefin-based additives or increase the content of these additives, but in this case, there may be a problem that changes in physical properties other than viscosity may occur. On the other hand, in the case of the present disclosure, by using the above-mentioned styrene-butadiene-styrene triblock copolymer, there is an advantage that the physical properties such as viscosity may be easily adjusted, and simultaneously, the change of other physical properties does not occur.

Further, the styrene-butadiene-styrene triblock copolymer has a melt flow index of 30 g/10 min to 50 g/10 min, preferably about 40 to about 50 g/10 min, or about 45 to about 50 g/10 min, as measured according to ASTM D1238 standards at 190 °C/5 kg.

Thus, as the melt flow index of the styrene-butadiene-styrene triblock copolymer, which is the base resin of the hot-melt adhesive composition, falls within the above range, the low-temperature fluidity of the hot-melt adhesive composition is improved, and adhesive force and cohesive force are improved, and thus excellent processability can be achieved even at relatively low temperatures.

Further, according to the present disclosure, the hot-melt adhesive composition has a melt viscosity at 120°C of 4.5 Pa*s (4500 cPs) to 5.2 Pa*s (5200 cPs), and at this time, a rate of change in the viscosity may be about 10% or less.

According to the present disclosure, the hot-melt adhesive composition has a melt viscosity at 160 °C of 0.65 Pa*s (650 cPs) to 0.75 Pa*s (750 cPs), and at time time, a rate of change in the viscosity may also be about 10% or less.

As described above, the hot-melt adhesive composition according to one embodiment of the present disclosure has relatively low viscosity characteristics, and hardly changes in viscosity even after aging, and thus can be melt processed at a low temperature, thereby being capable of having excellent adhesive force and heat resistance even while improving processability, and further realizing excellent characteristics of mechanical properties after curing.

In addition, the hot-melt adhesive composition has a tensile strength value of 0.5 to 0.6 N/mm² at the time of preparing a specimen according to ASTM D638 standard.

Specifically, when a hot-melt adhesive composition according to an embodiment of the present disclosure is melted and a cured specimen having a form conforming to ASTM D638 standard is prepared, it may have a tensile strength value as described above. The tensile strength value is a physical property that can represent the durability and physical stability of the adhesive surface when forming the adhesive surface with an adhesive, and the hot-melt adhesive composition according to one embodiment of the present disclosure has the above-mentioned tensile strength value, and thereby can realize excellent adhesion durability.

Further, the tackifier contained in the hot-melt adhesive composition may include any one or more of at least partially hydrogenated rosin ester-based compounds and at least partially hydrogenated dicyclopentadiene-based polymerized petroleum resins.

Here, rosin is used as a concept that includes all of abietic acid, dehydro-abietic acid in which hydrogen is removed from abietic acid, and dihydro- or tetrahydro- abietic acid to which 2 or 4 hydrogens are added. Abietic acid and dihydroabietic acid to which 2 hydrogens are added are used as a concept that includes various isomers depending on the position of the double bond.

In the case of dehydroabietic acid, it can be represented by the following Chemical Formula.

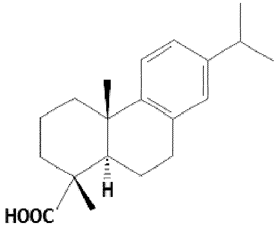

That is, dehydroabietic acid has the most stable form of the above-mentioned rosin compounds, in which two hydrogens are removed and an aromatic ring is formed in the abietic acid structure containing two double bonds.

In the case of abietic acid, which can be seen in the basic form of rosin compounds, it can be represented by the following Chemical Formula.

That is, abietic acid has a stable form in which two double bonds are conjugated in the tricyclic compound, and a unique color is expressed by such a conjugation double bond. In addition, in abietic acid, the position of the double bond can be easily changed in the above structure, which makes it possible to have various forms of isomers. These isomers also have mostly conjugated double bonds, and thus have a unique color.

In the case of dihydroabietic acid, two hydrogens are added to the above abietic acid isomer to have only one double bond in the molecule. The position of the double bond may vary depending on the isomer structure of abietic acid before hydrogenation.

Further, in the case of tetrahydroabietic acid in which four hydrogens are added to abietic acid, hydrogen is added to all double bonds to have a saturated aliphatic tricyclic form, and thereby, it has high stability and exhibits no color as compared with the abietic acid derivative having a double bond.

That is, dehydroabietic acid has the most stable form of the above-mentioned rosin compounds, in which two hydrogens are removed and an aromatic ring is formed in the abietic acid structure containing two double bonds.

Further, in the case of abietic acid, which can be seen in the basic form of rosin compounds, it can be represented by the following Chemical Formula.

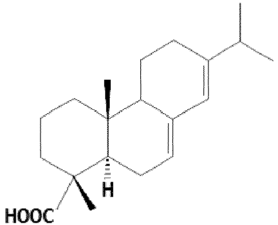

That is, abietic acid can have a stable form in which two double bonds are conjugated in a tricyclic compound. This double bond can vary easily in its position, and thus, has various forms of isomers, and these isomers also have conjugated double bonds.

In the case of dihydroabietic acid, two hydrogens are added to the above abietic acid isomer to have only one double bond in the molecule. The position of the double bond may vary depending on the isomer structure of abietic acid before hydrogenation.

Further, in the case of tetrahydroabietic acid in which four hydrogens are added to abietic acid, hydrogen is added to all double bonds to have a saturated aliphatic tricyclic form, and thereby, it has high stability and exhibits no color as compared with the abietic acid derivative having a double bond.

Further, the rosin ester-based compound mentioned herein is one that is esterified by reacting the carboxyl group of abietic acid with an OH group of an alcohol or polyol, based on the above-described abietic acid or hydrogenated abietic acid structure, and this also includes all esterified products of natural or modified rosins. The alcohol or polyol is, for example, an aliphatic alcohol having 1 to 20 carbon atoms, and may be in the form of monoalcohol, diol, triol, tetraol, or pentaol. More specifically, it may be, for example, methanol, ethanol, glycerol, ethylene glycol, diethylene glycol, or pentaerythritol. When polyol is used, abietic acid can cause an esterification reaction with all or part of the hydroxyl groups of the polyol, which results in the formation of multivalent esters, such as a monoesters, diesters, tertiary esters, or quaternary esters.

In the tackifier used in the present disclosure, the inclusion of at least partially hydrogenated rosin ester-based compound can be explained as necessarily including at least one selected from the group consisting of abietic acid, dihydroabietic acid, and tetrahydroabietic acid described above.

And, the dicyclopentadiene-based polymerized petroleum resin means C5, which is produced as a by-product in the naphtha cracking process, which decomposes at high temperature naphtha obtained by refining crude oil, that is, a petroleum resin containing C9-dicyclopentadiene prepared from cyclopentadiene oil.

The cyclopentadiene generated in the naphtha cracking process is, in most cases, dimerized and exists as a dicyclopentadiene structure. The cyclopentadiene and its dimer dicyclopentadiene are mutually convertible by the Diels-Alder reaction and the retro Diels-Alder reaction, in particular, cyclopentadiene can be polymerized into dicyclopentadiene by thermal polymerization or catalytic polymerization.

Therefore, " the tackifier used herein includes a at least partially hydrogenated dicyclopentadiene-based polymerized petroleum resin" may mean including both dicyclopentane and dicyclopentadiene in which hydrogen is added to at least a part of the dicyclopentadiene among the dicyclopentadiene-based compounds contained in the above-mentioned dicyclopentadiene-based polymerization petroleum resin.

According to one embodiment of the present disclosure, the tackifier may be included in an amount of about 200 to about 400 parts by weight based on 100 parts by weight of the styrene-butadiene-styrene triblock copolymer.

When the tackifier is contained in an excessively small amount, the tackifying effect is insufficient, and in the hot-melt adhesive composition, there may be a problem that physical properties related to cohesion and adhesion are not sufficiently exhibited. When the tackifier is contained in an excessively large amount, the cohesive force of the adhesive component may be reduced, which may cause a problem that the adhesion-related physical properties are also deteriorated.

Further, the plasticizer oil contained in the hot-melt adhesive composition may include petroleum-based mineral oil.

Petroleum-based mineral oil is a liquid by-product produced in the process of refining crude oil into petroleum, and is also called liquid paraffin. There are typically paraffinic oils based on n-alkanes, naphthenic oils based on cycloalkanes, and aromatic oils based on aromatic hydrocarbons, and in the present disclosure, the petroleum-based mineral oil is a concept including both the above-mentioned oil and its modified oil.

According to one embodiment of the present disclosure, the petroleum-based mineral oil is preferably paraffinic oil, and white oil or the like modified by hydrogen treatment and/or dewaxing in the presence of a catalyst may be more preferred.

Specifically, the paraffinic oil modified by hydrogen treatment and/or dewaxing treatment may include at least one selected from the group consisting of hydrotreated heavy paraffinic distillate (CAS registration no. 64742-54-7) or hydrotreated light paraffinic distillate(CAS registration no. 64742-55-8), solvent-dewaxed heavy paraffinic distillate (CAS registration no. 64742-65-0, solvent-dewaxed light paraffinic distillate (CAS registration no. 64742-56-9), hydrotreated and dewaxed heavy paraffinic distillate (CAS registration no. 91995-39-0), and hydrotreated and dewaxed light paraffinic distillate (CAS registration no. 91995-40-3), but the present disclosure is not necessarily limited thereto.

Further, the plasticizer oil is included in an amount of 90 to 110 parts by weight based on 100 parts by weight of the styrene-butadiene-styrene triblock copolymer. When the content of the plasticizer oil is too low, there may be a problem that the fluidity and low-temperature processability are lowered, and when the content of the plasticizer oil is too large, there may be a problem that the viscosity may be excessively increased and the adhesive performance is rather deteriorated.

Further, the hot-melt adhesive composition according to one embodiment of the present disclosure may further include known additives such as a light stabilizer, a filler, an antioxidant, and an ultraviolet absorber, if necessary.

These additives may be included in an amount of about 0.1 to about 10% by weight relative to the total composition, from the viewpoints of preventing deterioration in adhesion properties, processability, and mechanical properties after adhesion.

Meanwhile, according to one embodiment of the present disclosure, there is provided an adhesive member comprising:
a substrate; and
an adhesive layer formed on at least one surface of the substrate and formed by the hot-melt adhesive composition.

The adhesive member can be in the form of a film, a tape, or the like, and the above substrate can be a film having a layered structure of monolayer or two or more layers.

The substrate film may be made of paper, glass, or non-woven material, but is preferably a plastic material. These plastic materials are not particularly limited, and examples thereof include polyesters such as polyethylene terephthalate, polyethylene naphthalate, polybutylene terephthalate, or polybutylene naphthalate; polyolefins such as polyethylene, polypropylene, or ethylene-propylene copolymer; polyvinyl alcohol; polyvinylidene chloride; polyvinyl chloride; vinyl chloride-vinyl acetate copolymer; polyvinyl acetate; polyamide; polyimide; celluloses such as triacetyl cellulose, diacetyl cellulose or the like; fluorine-based resin; polyether; polyetheramide; polyether ether ketone; polyphenylene sulfide; polystyrene-based resins such as polystyrene; polycarbonate; polyethersulfone; acrylic resins such as polymethyl methacrylate, and the like. Further, the above materials can be used alone or in combination of two or more types.

Among them, polyesters, celluloses, acrylic resins, and the like may be preferable in consideration of the plastic strength, handleability, cost, dimensional stability, and optical properties.

In addition, the thickness of the adhesive layer may be about 10 to about 100 *µ*m, and preferably about 30 to about 70 *µ*m.

According to one embodiment of the present disclosure, the adhesive member may have excellent adhesive force in which the peel strength, that is, the T-peeling strength value according to ASTM D1876 standard is about 10 N/2.54 cm (N/in) or more, preferably about 10 to about 15 N/2.54 cm (N/in), or about 10 to about 12 N/2.54 cm (N/in).

Hereinafter, the actions and effects of the present disclosure will be described in more detail by way of specific examples. However, these examples are presented for illustrative purposes only, and the scope of the present disclosure is not determined thereby.

### <Example>

### Styrene-butadiene-styrene triblock copolymer

### Preparation Example 1

To a high-pressure reactor, 5000 g of cyclohexane was added and 400 g of styrene was added, and then the temperature of the reactor was raised to about 60°C while stirring at about 400 rpm.

As a catalyst, 50 g of n-butyllithium (3 wt% in cyclohexane) was added and the solution polymerization reaction was performed while raising the temperature to about 130°C under a pressure of about 490 Pa (5 kgf/cm²).

About 5 minutes after the reaction temperature reached 130°C,the reaction mixture was cooled to 60°C, and 700 g of butadiene was added while maintaining the temperature. The polymerization reaction was performed while raising the temperature up to 130°C again under a pressure of about 490 Pa (5 kgf/cm²).

When the coagulation temperature showed the maximum temperature, it was judged that the butadiene reaction was terminated similarly to the styrene reaction.

About 5 minutes after the reaction temperature reached 130°C,a coupling agent (KA-22, manufacturer: Shin-Etsu) was added in the same equivalent weight as the n-butyl lithium, and the reaction was further performed for 5 minutes, thereby preparing the triblock copolymer.

Subsequently, about 0.1 g of water was added to terminate the reaction.

### Preparation Example 2

A styrene-butadiene-styrene triblock copolymer, Globalprene 3545 (LCY Chemical Corp.), was prepared.

### Reference Example 3

A styrene-butadiene-styrene triblock copolymer, Asaprene T-439 (Asahi Kasei), was prepared.

### Reference Example 4

A styrene-butadiene-styrene triblock copolymer, Taipol 4230 (TSRC Corp.), was prepared.

### Reference Example 5

A styrene-butadiene-styrene triblock copolymer, Taipol 4270 (TSRC Corp.), was prepared.

The characteristics of the styrene-butadiene-styrene triblock copolymer of the Preparation Examples are summarized in Table 1 below.

**[Table 1]**

| | Styrene content (wt%) | MI (ASTM D1238, 190 °C/5kg, g/10min) | Diblock content (wt%) |
|---|---|---|---|
| Preparation Example 1 | 45 | 46.3 | about 62 |
| Preparation Example 2 | 44.5 | 46.9 | about 63 |
| Reference Example 3 | 45 | 52.9 | about 60 |
| Reference Example 4 (4230) | 37.5 | 17 | less than about 1 |
| Reference Example 5 (4270) | 36 | 22 | about 70 |

### Preparation of Hot-melt Adhesive Composition

To a IL glass beaker, Kaydol (Sonneborn) which is a white mineral oil as a plasticizer oil, Escorez 5600 (ExxonMobil) which is a hydrogenated dicyclopentadiene polymerized petroleum resin as a tackifier, Irganox 1010 as an antioxidant, Irgafos 168 as a stabilizer, and Tinuvin P (above, BASF) as a UV absorber were added, and then heated in a 150°C convection oven for about 30 minutes. Then, the glass beaker was fixed to a heating mantle at 150°C, and stirred at 100 rpm. After the temperature inside the beaker reached 150°C, the speed was increased to 150 rpm, followed by further stirring.

The styrene-butadiene-styrene triblock copolymer of the Preparation Example was slowly added dropwise thereto, and then stirred at 200 rpm for 4 hours to completely dissolve the styrene-butadiene-styrene triblock copolymer, thereby preparing a hot-melt adhesive composition.

The composition of the hot-melt adhesive composition is shown in Table 2 below.

**[Table2]**

| Component (unit: part by weight) | Example 1 | Example 2 | Comparative Example 1 | Comparative Example 2 |
|---|---|---|---|---|
| SBS | Preparation Example 1/20 | Preparation Example 2/20 | Reference Example 4/6 Reference Example 5/8 | Reference Example 3/20 |
| Tackifier | 60 | 60 | 64 | 60 |
| Plasticizer oil | 19 | 19 | 21 | 19 |
| Irganox 1010 | 0.6 | 0.6 | 0.6 | 0.6 |
| Irgafox 168 | 0.2 | 0.2 | 0.2 | 0.2 |
| Tinuvin P | 0.2 | 0.2 | 0.2 | 0.2 |

### Preparation of Adhesive Member

The hot-melt adhesive compositions of the Examples and Comparative Examples were heated at 180 °C for about 5 minutes to confirm melting, which was coated onto a PET substrate having a thickness of 25 *µ*m on an applicator at 180 °C, and then coated using a blade so that the thickness of the adhesive layer was 50 *µ*m. The same PET substrate was simultaneously bonded as a cover film to prepare an adhesive member.

### Experimental Example

### Measurement of Viscosity

About 10 g of the hot-melt adhesive composition was added to a sample chamber, and the viscosities at 120 °C and 160 °C were measured using a Brookfield viscometer (DV2 + Model, Spindle Number 27) for 30 minutes.

Subsequently, the hot-melt adhesive composition was allowed to stand for 24 hours under the same conditions, and then the viscosity was measured by the same method to calculate the rate of reduction in viscosity. (Related standard: ASTM D4402).

### Measurement of Softening Point

The hot-melt adhesive composition was sufficiently put in a ring using the Automatic Softening Point Analyzer RB 365G Model, and was allowed to stand for 1 hour, and then a ball (diameter: 9.525 mm, weight: 3.5 g) was placed thereon. The sample was heated while raising the temperature at a rate of 5 °C/min, and the temperature when the ball was drooped 2.54 cm (1 inch) was measured. (Related standard: ASTM D36).

### Measurement of Adhesive Properties

The adhesive force of the adhesive member prepared above was measured in a T-peeling manner using a Texture Analyzer (TA). The adhesive member sample was cut to a width of 1 inch and a length of 100 mm, and measurement was performed at 0.3 m/min at room temperature. (Related standard: ASTM D1876)

### Measurement of Tensile Strength

After the hot-melt adhesive composition was melted, a specimen was prepared according to ASTM D638 Type-IV standard, and the tensile strength was measured. (Related standard: ASTM D638)

The measured values are summarized in Table 3 below.

**[Table 3]**

| | Unit | Example 1 | Example 2 | Comparative Example 1 | Comparative Example 2 |
|---|---|---|---|---|---|
| Adhesive properties | N/2.54 c m (N/in) | 11 | 11.2 | 12.2 | 11.4 |
| Softening point | °C | 80.8 | 79.7 | 74.2 | 74.2 |
| Viscosity (120 °C) | Pa*s (cPs) | 4.863 (4863) | 5.000 (5000) | 4.012 (4012) | 5.938 (5938) |
| Rate of reduction in viscosity(120 °C, 24h) | % | 2.1 | 2.3 | 8.6 | 5.3 |
| Viscosity (160 °C) | Pa*s (cPs) | 0.731 (731) | 0.7325 (732.5) | 0.715 (715) | 0.980 (980) |
| Rate of reduction in viscosity(160 °C, 24h) | % | 7.2 | 7.6 | 14 | 9.2 |
| Tensile strength | N/mm² | 0.52 | 0.55 | 0.3 | 0.38 |

Referring to Table 3, it can be seen that, in the case of the hot-melt adhesive composition according to Examples of the present disclosure, it has higher softening point and lower viscosity characteristics than the Comparative Examples.
In addition, it can be clearly seen that at a temperature of about 120 °C or about 160 °C, which can be seen as the temperature of use of a general adhesive, a change in viscosity is very small, and thus excellent adhesion stability can be realized. At the same time, it has an improved tensile strength value of about 40% or more compared to the Comparative Examples, and so it is expected that the adhesive surface has excellent durability and mechanical properties.

## Claims

1. A hot-melt adhesive composition comprising:
A) a styrene-butadiene-styrene triblock copolymer having:
a1) a styrene-based unit content of 30 to 50% by weight,
a2) a diblock content of 55% by weight or more, and
a3) a melt flow index of 30 g/10 min to 50 g/10 min as measured according to ASTM D1238 standard at 190 °C/5 kg,
B) a tackifier; and
C) a plasticizer oil,
wherein the hot-melt adhesive composition has a softening point of 75°C or more as measured according to ASTM D36 standard, and wherein the plasticizer oil is included in an amount of 90-110 parts by weight based on 100 parts by weight of the styrene-butadiene-styrene triblock copolymer,
wherein a melt viscosity at 120°C is 4.5 Pa*s (4500 cPs) to 5.2 Pa*s (5200 cPs),
wherein a melt viscosity at 160°C is 0.65 Pa*s (650 cPs) to 0.75 Pa*s (750 cPs), and
wherein the hot-melt adhesive composition has a tensile strength value of 0.5 to 0.6 N/mm² at the time of preparing a specimen according to ASTM D638 standard.

2. The hot-melt adhesive composition according to claim 1,
wherein a rate of change in the viscosity is 10% or less, the rate of change in the viscosity is measured by adding about 10 g of the hot-melt adhesive composition to a sample chamber, measuring the viscosities at 120°C using a Brookfield viscometer (DV2 + Model, Spindle Number 27) for 30 minutes, subsequently, allowing the hot-melt adhesive composition to stand for 24 hours under the same conditions, and then measuring the viscosity by the same method to calculate the rate of reduction in viscosity (related standard: ASTM D4402).

3. The hot-melt adhesive composition according to claim 1,
wherein a rate of change in the viscosity is 10% or less, the rate of change in the viscosity is measured by adding about 10 g of the hot-melt adhesive composition to a sample chamber, measuring the viscosities at 160°C using a Brookfield viscometer (DV2 + Model, Spindle Number 27) for 30 minutes, subsequently, allowing the hot-melt adhesive composition to stand for 24 hours under the same conditions, and then measuring the viscosity by the same method to calculate the rate of reduction in viscosity (related standard: ASTM D4402).

4. The hot-melt adhesive composition according to claim 1,
wherein the tackifier includes any one or more of at least partially hydrogenated rosin ester-based compounds and at least partially hydrogenated dicyclopentadiene-based polymerized petroleum resins.

5. The hot-melt adhesive composition according to claim 1,
wherein the tackifier is included in an amount of 200 to 400 parts by weight based on 100 parts by weight of the styrene-butadiene-styrene triblock copolymer.

6. The hot-melt adhesive composition according to claim 1,
wherein the plasticizer oil includes petroleum-based mineral oils.

7. An adhesive member comprising:
a substrate; and
an adhesive layer formed on at least one surface of the substrate and formed by the hot-melt adhesive composition according to claim 1.

8. The adhesive member according to claim 7,
wherein a thickness of the adhesive layer is 10 to 100 *µ*m.

9. The adhesive member according to claim 7,
wherein a T-peeling strength value according to ASTM D1876 standard is 10 N/2.54 cm (10 N/in) or more.

## Patentansprüche

1. Heißschmelzklebstoffzusammensetzung, umfassend:
A) ein Styrol-Butadien-Styrol-Triblockcopolymer mit:
a1) einem Gehalt an Einheiten auf Basis von Styrol von 30 bis 50 Gew.-%,
a2) einem Diblockgehalt von 55 Gew.-% oder mehr und
a3) einem Schmelzflussindex von 30 g/10 min bis 50 g/10 min, gemessen gemäß der Norm ASTM D1238 bei 190 °C/5 kg,
B) einem Klebrigmacher und
C) einem Weichmacheröl,
wobei die Heißschmelzklebstoffzusammensetzung einen Erweichungspunkt von 75 °C oder mehr, gemessen gemäß der Norm ASTM D36, aufweist und wobei das Weichmacheröl in einer Menge von 90-110 Gewichtsteilen, bezogen auf 100 Gewichtsteile des Styrol-Butadien-Styrol-Triblockcopolymers, enthalten ist,
wobei eine Schmelzviskosität bei 120 °C 4,5 Pa^{∗}s (4500 cps) bis 5,2 Pa*s (5200 cps) beträgt,
wobei eine Schmelzviskosität bei 160 °C 0,65 Pa*s (650 cps) bis 0,75 Pa*s (750 cps) beträgt und
wobei die Heißschmelzklebstoffzusammensetzung einen Zugfestigkeitswert von 0,5 bis 0,6 N/mm² zum Zeitpunkt der Herstellung einer Probe gemäß der Norm ASTM D638 aufweist.

2. Heißschmelzklebstoffzusammensetzung nach Anspruch 1,
bei der eine Änderungsrate der Viskosität 10 % oder weniger beträgt, die Änderungsrate der Viskosität durch Zugeben von etwa 10 g der Heißschmelzklebstoffzusammensetzung zu einer Probenkammer, Messen der Viskositäten bei 120 °C unter Verwendung eines Brookfield-Viskosimeters (DV2 + Modell, Spindelzahl 27) für 30 Minuten, anschließendem Stehenlassen der Heißschmelzklebstoffzusammensetzung für 24 Stunden unter den gleichen Bedingungen und dann Messen der Viskosität durch das gleiche Verfahren, um die Reduktionsrate der Viskosität zu berechnen (verwandte Norm: ASTM D4402), gemessen wird.

3. Heißschmelzklebstoffzusammensetzung nach Anspruch 1,
bei der eine Änderungsrate der Viskosität 10 % oder weniger beträgt, die Änderungsrate der Viskosität durch Zugeben von etwa 10 g der Heißschmelzklebstoffzusammensetzung zu einer Probenkammer, Messen der Viskositäten bei 160 °C unter Verwendung eines Brookfield-Viskosimeters (DV2 + Modell, Spindelzahl 27) für 30 Minuten, anschließendem Stehenlassen der Heißschmelzklebstoffzusammensetzung für 24 Stunden unter den gleichen Bedingungen und dann Messen der Viskosität durch das gleiche Verfahren, um die Reduktionsrate der Viskosität zu berechnen (verwandte Norm: ASTM D4402), gemessen wird.

4. Heißschmelzklebstoffzusammensetzung nach Anspruch 1,
bei der der Klebrigmacher eine oder mehrere von wenigstens teilweise hydrierten Harzester-basierten Verbindungen und wenigstens teilweise hydrierten Dicyclopentadien-basierten polymerisierten Petroleumharzen umfasst.

5. Heißschmelzklebstoffzusammensetzung nach Anspruch 1,
bei der der Klebrigmacher in einer Menge von 200 bis 400 Gewichtsteilen, bezogen auf 100 Gewichtsteile des Styrol-Butadien-Styrol-Triblockcopolymers, enthalten ist.

6. Heißschmelzklebstoffzusammensetzung nach Anspruch 1,
bei der das Weichmacheröl Mineralöle auf Erdölbasis enthält.

7. Klebstoffelement, umfassend:
ein Substrat; und
eine Klebstoffschicht, die auf mindestens einer Oberfläche des Substrats gebildet ist und durch die Heißschmelzklebstoffzusammensetzung nach Anspruch 1 gebildet ist.

8. Klebstoffelement nach Anspruch 7,
bei dem eine Dicke der Klebstoffschicht 10 bis 100 µm beträgt.

9. Klebstoffelement nach Anspruch 7,
bei dem ein T-Schälfestigkeitswert gemäß der Norm ASTM D1876 10 N/2,54 cm (10 N/in) oder mehr beträgt.

## Revendications

1. Composition adhésive thermofusible comprenant :
A) un copolymère triblocs styrène-butadiène-styrène ayant :
a1) une teneur en unités à base de styrène qui va de 30 à 50 % en poids,
a2) une teneur en diblocs égale ou supérieure à 55 % en poids et
a3) un indice de fusion, tel que mesuré conformément à la norme ASTM D 1238 à 190 °C/5 kg, qui va de 30 g/10 min à 50 g/10 min,
B) un agent tackifiant ; et
C) une huile plastifiante,
où la composition adhésive thermofusible a un point de ramollissement, tel que mesuré conformément à la norme ASTM D36, égal ou supérieur à 75 °C et où l'huile plastifiante est incluse à une quantité de 90-110 parties en poids pour 100 parties en poids du copolymère triblocs styrène-butadiène-styrène,
où une viscosité à l'état fondu à 120 °C va de 4,5 Pa*s (4 500 cPs) à 5,2 Pa*s (5 200 cPs),
où une viscosité à l'état fondu à 160 °C va de 0,65 Pa*s (650 cPs) à 0,75 Pa*s (750 cPs) et
où la composition adhésive thermofusible a une valeur de résistance à la traction qui va de 0,5 à 0,6 N/mm² à la préparation d'un spécimen d'essai conformément à la norme ASTM D638.

2. Composition adhésive thermofusible selon la revendication 1,
où un taux de changement de la viscosité est inférieur ou égal à 10 %, le taux de changement de la viscosité étant mesuré en ajoutant environ 10 g de la composition adhésive thermofusible dans une chambre à échantillon, en mesurant la viscosité à 120 °C au moyen d'un viscosimètre Brookfield (Modèle DV2+, mobile numéro 27) pendant 30 minutes puis en laissant la composition adhésive thermofusible reposer pendant 24 heures dans les mêmes conditions avant de mesurer la viscosité par la même méthode pour calculer le taux de réduction de la viscosité (norme correspondante : ASTM D4402).

3. Composition adhésive thermofusible selon la revendication 1,
où un taux de changement de la viscosité est inférieur ou égal à 10 %, le taux de changement de la viscosité étant mesuré en ajoutant environ 10 g de la composition adhésive thermofusible dans une chambre à échantillon, en mesurant la viscosité à 160 °C au moyen d'un viscosimètre Brookfield (Modèle DV2+, mobile numéro 27) pendant 30 minutes puis en laissant la composition adhésive thermofusible reposer pendant 24 heures dans les mêmes conditions avant de mesurer la viscosité par la même méthode pour calculer le taux de réduction de la viscosité (norme correspondante : ASTM D4402).

4. Composition adhésive thermofusible selon la revendication 1,
où l'agent tackifiant inclut l'un quelconque ou plusieurs parmi des composés à base d'un ester de rosine au moins partiellement hydrogénés et des résines de pétrole polymérisées à base de dicyclopentadiène au moins partiellement hydrogénées.

5. Composition adhésive thermofusible selon la revendication 1,
où l'agent tackifiant est inclus à une quantité qui va de 200 à 400 parties en poids pour 100 parties en poids du copolymère triblocs styrène-butadiène-styrène.

6. Composition adhésive thermofusible selon la revendication 1,
où l'huile plastifiante inclut des huiles minérales à base de pétrole.

7. Organe adhésif comprenant :
un substrat ; et
une couche adhésive formée sur une face au moins du substrat, et formée par la composition adhésive thermofusible selon la revendication 1.

8. Organe adhésif selon la revendication 7,
où une épaisseur de la couche adhésive va de 10 à 100 µm.

9. Organe adhésif selon la revendication 7,
où une valeur de la résistance à l'essai de pelage en T, déterminée conformément à la norme ASTM D1876, est égale ou supérieure à 10 N/2,54 cm (10 N/pouce).
